# EUROPÄISCHE PATENTSCHRIFT

(11) **EP 1 784 107 B1**
(45) Veröffentlichungstag und Bekanntmachung des Hinweises auf die Patenterteilung: **08.10.2014**
(21) Anmeldenummer: 05776335.1
(22) Anmeldetag: 23.08.2005
(51) Int. Cl.: A47L 9/12, A47L 9/10

(54) **STAUBSAUGER MIT EINEM FEINSTAUBFILTER IM ABLUFTSTROM**
VACUUM CLEANER PROVIDED WITH A FINE DUST FILTER IN THE OUTGOING AIR FLOW
ASPIRATEUR POURVU D'UN FILTRE A POUSSIERE FINE DANS LE FLUX D'AIR EVACUE

(30) Priorität: 01.09.2004 DE 102004042237
(43) Veröffentlichungstag der Anmeldung: 16.05.2007
(73) Patentinhaber: Miele & Cie. KG, 33332 Gütersloh (DE)
(72) Erfinder: MERSMANN, Udo, 33335 Gütersloh (DE); STEINKÖTTER, Heinz-Günter, 33739 Bielefeld (DE)
(86) Internationale Anmeldenummer: PCT/EP2005/009072
(87) Internationale Veröffentlichungsnummer: WO 2006/024422

(56) Entgegenhaltungen:
- EP-A- 0 636 337
- DE-A1- 3 517 329
- DE-C1- 4 317 715

## Beschreibung

Die Erfindung betrifft einen Staubsauger mit einem Feinstaubfilter im Abluftstrom des Sauggebläses, wobei das Feinstaubfilter in einem Filterkassettenraum am Staubsauger auswechselbar unter Zwischenlage eines Dichtelementes angeordnet ist.

Aus der DE 34 04 395 A1 ist ein Staubsauger mit einem Staubfilterbeutel im Saugluftstrom des Sauggebläses bekannt, wobei in Reihe zum Staubfilterbeutel ein Feinstaubfilter in einem separaten Filtergehäuse auswechselbar angeordnet ist. Das Nachfilter filtert vom Staubbeutel nicht zurückgehaltene kleinste Verunreinigungen aus dem Abluftstrom des Staubsaugers heraus. Bei dieser Ausbildung ist das Dichtelement stirnseitig bzw. auf der Unterseite des kassettenartig ausgebildeten Feinstaubfilters angeordnet und dichtet das Feinstaubfilter zum Staubsaugergehäuse hin ab. Bei dieser Ausführung kann das Feinstaubfilter durch den Überdruck des Abluftstromes in der Filteraufnahme angehoben werden, wodurch die Dichtwirkung verringert wird und Feinstaub in den Abluftstrom gelangen kann.

Aus der DE 42 40 172 C2 ist ein Staubsauger mit einem Feinstaubfilter im Abluftstrom bekannt, welches ebenfalls in einem Filterkassettenraum am Staubsauger angeordnet ist. Der Filterkassettenraum wird vom Gehäusedeckel des Staubsaugers überdeckt. Das Dichtelement ist ebenfalls auf der Unterseite des kassettenartig ausgebildeten Feinstaubfilters angeordnet und dichtet das Feinstaubfilter zum Staubsaugergehäuse hin ab. Auch hier kann das Feinstaubfilter durch den Überdruck des Abluftstromes in der Filteraufnahme angehoben werden, wodurch die Dichtwirkung verringert wird und Feinstaub in den Abluftstrom gelangen kann.

Aus der DE 30 31 024 C2 ist ein Staubsauger mit einer in einem Spalt zwischen dem Rand einer Gehäuseöffnung und einem zugehörigen Deckel angeordneten Dichtung, die mit ihrem Dichtungsfuß am Rand der Gehäuseöffnung oder am Deckel befestigt ist, bekannt. Dabei ist die Dichtlippe stirnseitig am Innenrand der Gehäuseöffnung mit dem Dichtungsfuß verbunden, so dass der im Innenraum entstehende Unterdruck die Dichtung im Öffnungsspalt aufstellt. Eine derartige Dichtungsanordnung ist vorgesehen, um die erforderliche Krafteinwirkung beim Schließen des Gehäusedeckels möglichst gering zu halten und trotzdem das Ausgleichen von Fertigungstoleranzen im Dichtungsspalt zu ermöglichen, ist die Dichtlippe am Dichtungsfuß außerhalb der gegenübertretenden Dichtflächen des Gehäusedeckels und der Gehäuseöffnung gehalten. Eine derartige stirnseitig angeordnete Dichtung mit einem Dichtungsfuß und einer außerhalb der Dichtflächen gehaltenen Lippendichtung ist für die Anordnung eines Feinstaubfilters im Abluftstrom eines Staubsaugers ungeeignet.

Die DE 4317715 C1 offenbart ebenfalls eine Filterkassette für einen Staubsauger, die abluftstromseitig an einer Zwischenwand zwischen Staub- und Gebläseraum angeordnet ist. Zur Fixierung der Filterkassette sind an der Zwischenwand zwei Führung vorgesehen, in die die Filterkassette mit ihren vorgesehenen seitlichen Führungsrändern einsteckbar ist. Auf drei seitlichen Rändern der Filterkassette ist eine nach außen abstehende Dichtlippe angeformt, die die Filterkassette gegenüber der in der Zwischenwand für den Saugluftstrom vorgesehenen Durchtrittsöffnung abdichtet.

Aus der EP 0 636 337 B1 ist ein Staubsauger bekannt bei dem im Abluftstrom des Sauggebläses ein Filterelement angeordnet ist. Auf einer Stirnseite des Filterelements ist ein radial umlaufender Dichtring angeordnet, der das Filterelement von der Durchströmungsöffnung der Staubkammer abdichtet.Der Erfindung stellt sich somit das Problem, eine wirksame Dichtungsanordnung für ein Feinstaubfilter im Abluftstrom eines Staubsaugers zu gestalten, mit der die oben beschriebenen Nachteile vermieden werden.

Erfindungsgemäß wird dieses Problem durch einen Staubsauger mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere in der Anordnung einer Dichtlippe im seitlichen Zwischenraum von Filterkassettenaufnahme und Feinstaubfilter. Die Lippe ist unter Vorspannung im Zwischenraum angeordnet. Wird das Feinstaubfilter bedingt durch den Überdruck der Abluft in der Filterkassettenaufnahme angehoben, stellt sich die unter Vorspannung an der Filteraufnahme oder der Filterkassette anliegende Dichtlippe (Anspruch 2 oder Anspruch 6) im Abluftstrom auf. Durch die besondere Ausgestaltung der Filterkassettenaufnahme und des Feinstaubfilters erhöht sich die Dichtwirkung mit zunehmendem Druck der Abluft.

Ein Ausführungsbeispiel der Erfindung ist in den Zeichnungen rein schematisch dargestellt und wird nachfolgend näher beschrieben. Es zeigt
- Figur 1: einen Staubsauger bei geöffnetem Gehäusedeckel mit einem Feinstaubfilter im Abluftstrom,
- Figur 2: die Anordnung des Feinstaubfilters in der Filterkassettenaufnahme,
- Figur 3: die Lippendichtung als Einzelheit X, Anordnung am Feinstaubfilter, Variante I,
- Figur 4: die Lippendichtung als Einzelheit, Anordnung am Feinstaubfilter, Variante II,
- Figur 5: die Lippendichtung als Einzelheit, Anordnung an der Filterkassettenaufnahme,
- Figur 6: das Feinstaubfilter.

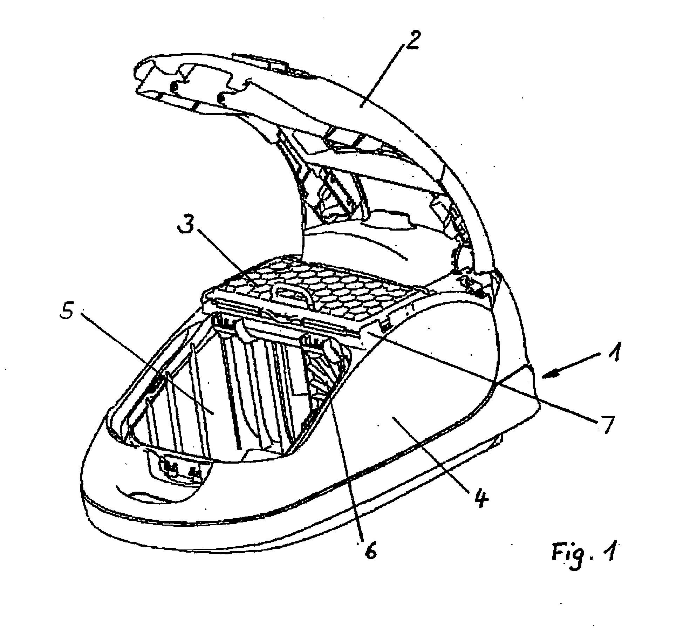

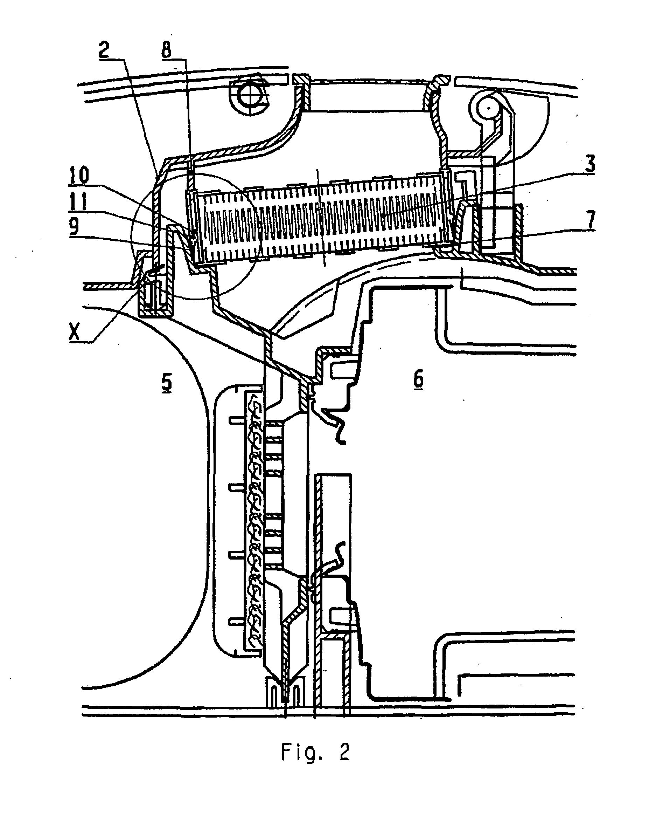

In der Figur 1 ist ein Staubsauger, hier ein Bodenstaubsauger (1) bei geöffnetem Gehäusedeckel (2) mit einem Feinstaubfilter (3) im Abluftstrom gezeigt. Das Gehäuse (4) des Bodenstaubsaugers (1) ist in einen über den Gehäusedeckel (2) zugänglichen Staubsammelraum (5) sowie einen Motorgebläseraum (6) unterteilt. In dem aus dem Motorgebläseraum (6) austretenden Abluftstrom ist das Feinstaubfilter (3) in einer Filterkassettenaufnahme (7) angeordnet. Das Feinstaubfilter (3) ist kassettenartig ausgebildet und wird bei geschlossenem Gehäusedeckel (2) in der Filterkassettenaufnahme (3) über in Figur 2 näher dargestellte Ansätze (8) am Gehäusedeckel (2) fixiert.

Im Zwischenraum des seitlichen Randes der Filterkassettenaufnahme (7) und des seitlichen Randes des Feinstaubfilters (3) ist eine Lippendichtung (9) umlaufend angeordnet. Bei dem Ausführungsbeispiel in Figur 2 ist die Lippendichtung (9) an ihrem Dichtungsfuß (10) in einer umlaufenden Aufnahme (11) am seitlichen Rand des Feinstaubfilters (3) befestigt.

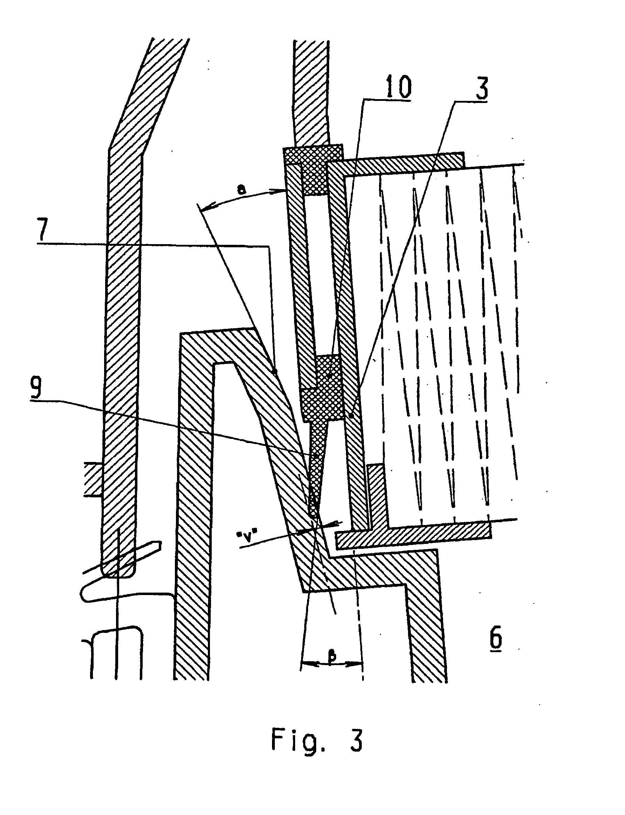

In der Figur 3 ist die Einzelheit X der umlaufenden Lippendichtung (9) im Spalt zwischen Filterkassettenaufnahme (7) und Feinstaubfilter (3) vergrößert dargestellt. Der Rand der Filterkassettenaufnahme (7) verläuft im wesentlichen unter einem Winkel α zum seitlichen Rand des Feinstaubfilters (3). Die Lippendichtung (9) ist unter einem Winkel β zum seitlichen Rand des Feinstaubfilters (3) angeordnet. Durch die Abstimmung der Winkel a und β ist die Lippendichtung (9) unter Vorspannung "V" in der Filterkassettenaufnahme (7) angeordnet und dichtet das Feinstaubfilter in der Aufnahme ab. Der Überdruck im Motorgebläseraum (6) presst die Lippendichtung (9) zusätzlich an die Anlagefläche der Filterkassettenaufnahme (7). Der Anpressdruck erhöht sich mit zunehmenden Überdruck im Motorgebläseraum (6). Die Dichtwirkung bleibt auch erhalten, wenn das Feinstaubfilter (3) in der Filterkassettenaufnahme (7) geringfügig angehoben wird.

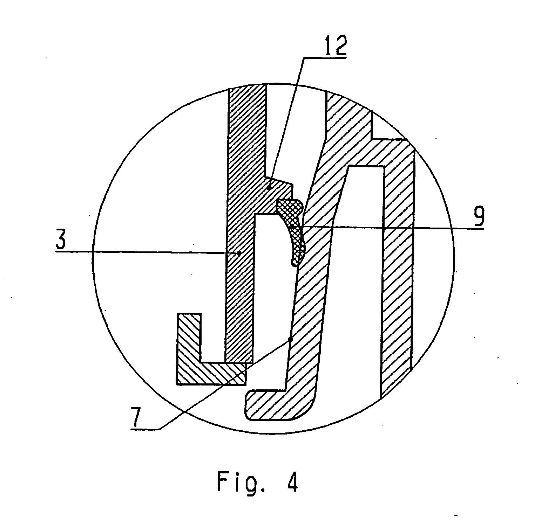

In Figur 4 ist eine weitere Ausbildung der Lippendichtung (9) gezeigt. Die Lippendichtung (9) ist an einem umlaufenden Steg (12) des Feinstaubfilters (3) angespritzt.

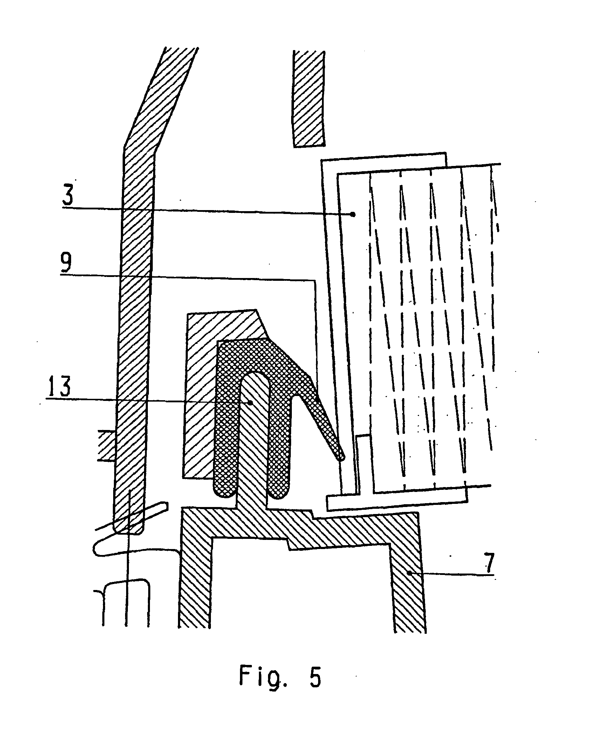

Figur 5 zeigt die Anordnung der Lippendichtung (9) an einem in der Filterkassettenaufnahme (7) umlaufend angeordneten Steg (13). Die Lippendichtung (9) kann auch angespritzt werden.

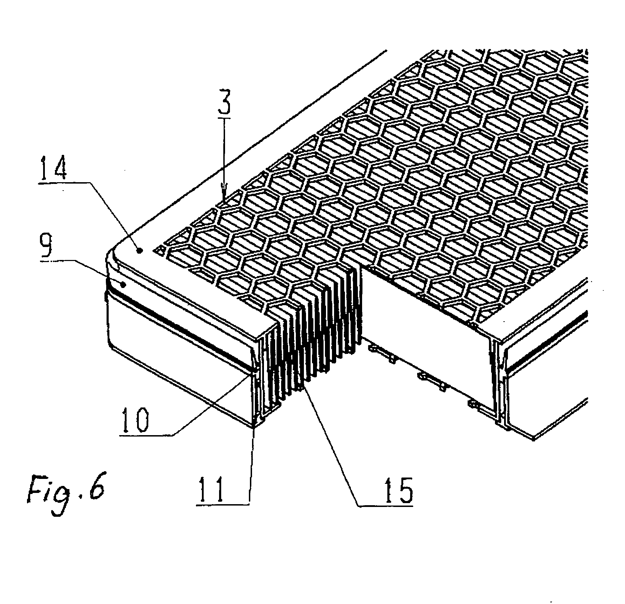

Figur 6 zeigt das Feinstaubfilter (3) als Einzelheit. Das Feinstaubfilter (3) ist kassettenartig ausgebildet und weist ein Filtergehäuse (14) auf, in dem ein Filterelement (15) angeordnet ist. Die Lippendichtung (9) ist mit ihrem Dichtungsfuß (10) in einer am seitlichen Rand des Filtergehäuses (14) des Feinstaubfilters (3) umlaufend angeordneten Aufnahme (11) befestigt.

## Patentansprüche

1. Staubsauger mit einem Feinstaubfilter im Abluftstrom des Sauggebläses, wobei das Feinstaubfilter in einem Filterkassettenraum am Staubsauger auswechselbar unter Zwischenlage eines Dichtelementes angeordnet ist,
**dadurch gekennzeichnet,**
**dass** eine Lippendichtung (9) im Zwischenraum des seitlichen Randes der Filterkassettenaufnahme (7) und des seitlichen Randes des Feinstaubfilters (3) umlaufend angeordnet ist.

2. Staubsauger mit einem Feinstaubfilter nach Anspruch 1,
**dadurch gekennzeichnet,**
**dass** das Feinstaubfilter (3) mit einer am seitlichen Rand umlaufend angeordneten Lippendichtung (9) ausgebildet ist, die unter Vorspannung "V" am seitlichen Rand der Filterkassettenaufnahme (7) anliegt.

3. Staubsauger mit einem Feinstaubfilter nach Anspruch 2,
**dadurch gekennzeichnet,**
**dass** das Feinstaubfilter (3) kassettenartig mit einem Filtergehäuse (14) und mindestens einem darin angeordneten Filterelement (15) ausgebildet ist, wobei die Lippendichtung (9) am seitlichen Rahmenrand des Filtergehäuses (14) umlaufend angeordnet ist.

4. Staubsauger mit einem Feinstaubfilter nach Anspruch 2 oder 3,
**dadurch gekennzeichnet,**
**dass** die Lippendichtung (9) an einen Steg (12) angespritzt ist.

5. Staubsauger mit einem Feinstaubfilter nach Anspruch 2 oder 3,
**dadurch gekennzeichnet,**
**dass** die Lippendichtung (9) in einer seitlich umlaufenden Aufnahme (11) befestigt angeordnet ist.

6. Staubsauger mit einem Feinstaubfilter nach Anspruch 1,
**dadurch gekennzeichnet,**
**dass** die Filterkassettenaufnahme (7) mit einer am seitlichen Rand umlaufend angeordneten Lippendichtung (9) ausgebildet ist, die unter Vorspannung am seitlichen Rand des Feinstaubfilters (3) anliegt.

7. Staubsauger mit einem Feinstaubfilter nach Anspruch 6,
**dadurch gekennzeichnet,**
**dass** die Lippendichtung (9) am seitlichen Rand der Filterkassettenaufnahme (7) angespritzt ist.

8. Staubsauger mit einem Feinstaubfilter nach Anspruch 6,
**dadurch gekennzeichnet,**
**dass** die Lippendichtung (9) in einer seitlich umlaufenden Aufnahme befestigt angeordnet ist.

9. Staubsauger mit einem Feinstaubfilter nach Anspruch 6,
**dadurch gekennzeichnet,**
**dass** die Filterkassettenaufnahme (7) mit einem umlaufenden Steg (13) ausgebildet ist, auf den die Lippendichtung (9) aufgesetzt ist.

10. Staubsauger mit einem Feinstaubfilter nach Anspruch 6,
**dadurch gekennzeichnet,**
**dass** die Filterkassettenaufnahme (7) mit einem umlaufenden Steg (13) ausgebildet ist, an den die Lippendichtung (9) angespritzt ist.

## Claims

1. A vacuum cleaner having a fine dust filter provided in the exhaust air stream of the suction fan, the fine dust filter being replaceably disposed in a filter cartridge chamber on the vacuum cleaner with interposition of a sealing element.,
wherein a lip seal (9) is circumferentially disposed in the space between the lateral edge of the filter cartridge receptacle (7) and the lateral edge of the fine dust filter (3).

2. The vacuum cleaner having a fine dust filter as recited in Claim 1,
wherein the fine dust filter (3) is formed with a lip seal (9) circumferentially disposed on the lateral edge, said lip seal resting with a bias "V" against the lateral edge of the filter cartridge receptacle (7).

3. The vacuum cleaner having a fine dust filter as recited in Claim 2,
wherein the fine dust filter (3) is configured in a cartridge-like manner and includes a filter housing (14) having a filter element (15) disposed therein, the lip seal (9) being circumferentially disposed on the lateral frame edge of the filter housing (14).

4. The vacuum cleaner having a fine dust filter as recited in Claim 2 or 3,
wherein the lip seal (9) is injection-molded onto a rib (12).

5. The vacuum cleaner having a fine dust filter as recited in Claim 2 or 3,
wherein the lip seal (9) is mounted such that it is secured in a lateral circumferential receiving means (11).

6. The vacuum cleaner having a fine dust filter as recited in Claim 1,
wherein the filter cartridge receptacle (7) is formed with a lip seal (9) circumferentially disposed on the lateral edge, said lip seal resting with a bias against the lateral edge of the fine dust filter (3).

7. The vacuum cleaner having a fine dust filter as recited in Claim 6,
wherein the lip seal (9) is injection-molded onto the lateral edge of the filter cartridge receptacle (7).

8. The vacuum cleaner having a fine dust filter as recited in Claim 6,
wherein the lip seal (9) is mounted such that it is secured in a lateral circumferential receiving means.

9. The vacuum cleaner having a fine dust filter as recited in Claim 6,
wherein the filter cartridge receptacle (7) is formed with a circumferential rib (13) on which the lip seal (9) is placed.

10. The vacuum cleaner having a fine dust filter as recited in Claim 6,
wherein the filter cartridge receptacle (7) is formed with a circumferential rib (13) onto which the lip seal (9) is injection-molded.

## Revendications

1. Aspirateur avec un filtre à poussières fines dans le flux d'air de sortie du ventilateur d'aspiration, le filtre à poussières fines étant disposé dans un compartiment de cassette filtrante sur l'aspirateur de façon remplaçable, avec intercalation d'un élément d'étanchéité,
**caractérisé en ce**
**qu'**un joint d'étanchéité à lèvre (9) est disposé de façon périphérique dans l'espace intermédiaire du bord latéral du logement de cassette filtrante (7) et du bord latéral du filtre à poussières fines (3).

2. Aspirateur avec un filtre à poussières fines selon la revendication 1,
**caractérisé en ce que**
le filtre à poussières fines (3) est constitué avec un joint d'étanchéité à lèvre (9) qui est disposé de façon périphérique sur le bord latéral et est adjacent, avec une prétension
« V », au bord latéral du logement de cassette filtrante (7).

3. Aspirateur avec un filtre à poussières fines selon la revendication 2,
**caractérisé en ce que**
le filtre à poussières fines (3) est constitué à la façon d'une cassette avec un boîtier de filtre (14) et au moins un élément filtrant (15) disposé à l'intérieur du boîtier, le joint d'étanchéité à lèvre (9) étant disposé de façon périphérique sur le bord de cadre latéral du boîtier de filtre (14).

4. Aspirateur avec un filtre à poussières fines selon la revendication 2 ou 3, **caractérisé en ce que**
le joint d'étanchéité à lèvre (9) est moulé par injection sur une nervure (12).

5. Aspirateur avec un filtre à poussières fines selon la revendication 2 ou 3, **caractérisé en ce que**
le joint d'étanchéité à lèvre (9) est disposé fixé dans un logement (11) latéralement périphérique.

6. Aspirateur avec un filtre à poussières fines selon la revendication 1,
**caractérisé en ce que**
le logement de cassette filtrante (7) est constitué avec un joint d'étanchéité à lèvre (9) qui est disposé de façon périphérique sur le bord latéral et est adjacent, avec une prétension, au bord latéral du filtre à poussières fines (3).

7. Aspirateur avec un filtre à poussières fines selon la revendication 6, **caractérisé en ce que**
le joint d'étanchéité à lèvre (9) est moulé par injection sur le bord latéral du logement de cassette filtrante (7).

8. Aspirateur avec un filtre à poussières fines selon la revendication 6, **caractérisé en ce que**
le joint d'étanchéité à lèvre (9) est disposé fixé dans un logement latéralement périphérique.

9. Aspirateur avec un filtre à poussières fines selon la revendication 6, **caractérisé en ce que**
le logement de cassette filtrante (7) est constitué avec une nervure (13) périphérique sur laquelle est posé le joint d'étanchéité à lèvre (9).

10. Aspirateur avec un filtre à poussières fines selon la revendication 6, **caractérisé en ce que**
le logement de cassette filtrante (7) est constitué avec une nervure (13) périphérique sur laquelle le joint d'étanchéité à lèvre (9) est moulé par injection.
